# EUROPEAN PATENT APPLICATION

(11) **EP 1 588 624 A1**
(43) Date of publication of application: **26.10.2005**
(21) Application number: 04254568.1
(22) Date of filing: 30.07.2004
(51) Int. Cl.: A23C 20/02, A23C 20/00

(54) **Health food product**

(30) Priority: 19.04.2004 JP 2004002140 U; 10.05.2004 JP 2004139461
(71) Applicant: Wada, Kaoru, Tokyo (JP)
(72) Inventor: Wada, Kaoru, Tokyo (JP)
(74) Representative: Brown, David Leslie

(57) **Abstract**

A health food product in the shape of a hamburger sandwich does not include bread but rather comprises a combination of: a food material having as the primary component thereof a tofu product prepared by kneading tofu containing 65 to 90% water content well, forming a patty of a predetermined size, and deep frying the patty in oil at a temperature of 165 to 190°C; and a filling including vegetables, seaweed, meat, fish, shellfish, legumes/beans/seeds/nuts other than soy beans, eggs, dairy products, and oils and fats. The food material is sliced in the same way as with a bun so as to hold the filling, and may also include ingredients selected from vegetables, seaweed, meat, fish, shellfish, legumes/beans/seeds/nuts other than soy beans, eggs, dairy products, and oils and fats.

## Description

### BACKGROUND OF THE INVENTION

### 1. Field of the Invention

The present invention relates to a health food product which combines a food material primarily comprising soy protein which is a low-carbohydrate substance, with a filling containing an animal-based ingredient selected from butcher's meat, poultry, fish, shellfish, and like seafood.

### 2. Description of the Related Art

Various types of so-called "fast food" such as hamburgers and the like have been developed in recent years, and are consumed widely particularly among the young generation. However, excessive eating or habitual eating of such fast food is leading to a problem of obesity. Accordingly, a great number of food products and the like which do not lead to obesity when eaten have been proposed as of recent.

Many such food products are based on foodstuffs which have been conventionally unique to or closely associated with the Japanese diet. Note that in the present specification, many of these foods will be referred to by their Japanese names, followed by a brief description in English, since while some of these Japanese names may be unfamiliar with most Westerners, they will not be unfamiliar with those in the culinary field, and particularly with those in the health food field. That is to say, those skilled in the art will recognize these foodstuffs and their features.

Examples of known diet food products include konnyaku (a product of *Amorphophaiius Konjac,* a member of the yam family, which contains glucomannan) and tofu processed food products. Specific examples include a food produce having legume pomace as the primary ingredient thereof (Japanese Unexamined Patent Application Publication No. 10-52233, p 1), a food product combining soy protein, yeast, and sesame (Japanese Unexamined Patent Application Publication No. 2003-339344, p 1), a hamburger product using tofu as an ingredient (Japanese Unexamined Patent Application Publication No. 11-276129, p 1), and a ganmodoki (tofu fritter) food product wherein tofu is pulverized and kneaded, and then deep fried in oil (Japanese Patent No. 3,144,276, p 1) .

Of these, that disclosed in Japanese Unexamined Patent Application Publication No. 10-52233 is a diet food product combining soy protein such as okara (a pulp fiber by-product of soymilk) or soy pomace with konnyaku yams, and does not contain fish or meat. Accordingly, this food product is low in nutrition, and must be eaten along with other foodstuffs to obtain sufficient nutrients.

The invention disclosed in Japanese Unexamined Patent Application Publication No. 2003-339344 is a diet food produce whereby sufficient nutrition can be obtained, containing a combination of dairy protein and soy protein with yeast and sesame. Accordingly this food product contains minerals, but calcium compounds and Casein Phospho Peptide must be added, so this food product is not an optimal easy food product. Also, the invention of Japanese Patent No. 3,144,276 only discloses a single tofu processed food produce combined with various types of foodstuffs, and does not take nutritional balance into consideration. Particularly, the Fifth Embodiment therein describes an atsuage (deep-dried pressed tofu) containing many vegetables, but ingredients to be combined therewith are not disclosed.

Conventionally, so-called "fast food" based on bread, which is a processed food of grain such as wheat flour or the like containing great amounts of starch high in sugars, has been popular due to the good taste, but eating such food products which contain great amounts of grain, starch, and sugars, tends to lead to obesity. Accordingly, as of recent, there is an increase of fast foods which have done away with the bread portion, and comprise only the filling. However, many such fast food products still contain bread products as the main ingredient thereof, and also contain great amounts of sugar, and accordingly, eating these food products also lead to increased weight.

### SUMMARY OF THE INVENTION

Accordingly, it is an object of the present invention to provide a health food product having a low-carbohydrate substance as the primary food material thereof.

It is another object of the present invention to provide a health food product which has a palatable texture nonexistent in fast food products which are based on processed food products primarily comprising grains which contain starch.

It is yet another object of the present invention to provide a health food product wherein a food material primarily comprising tofu is formed in the shape of a disc, which is sliced horizontally and stuffed with food materials used for making meatloaf, such as vegetables, meat, and so forth.

It is a further object of the present invention to provide a health food product wherein weight is not gained with a diet excluding grains, starches, and the like, even though the ordinary number of calories are taken, aided by the body's calorie-burning functions.

It is yet another object of the present invention to provide a health food product containing the three major nutrients, which does not cause increased weight even though eaten until the stomach is full.

It is yet another object of the present invention to provide a health food product containing soy protein, vegetables, seaweed, eggs, dairy products, fish and shellfish, meat, oils and fats, legumes/beans/seeds/nuts other than soy beans, and so forth, which is delicious to the taste.

In order to achieve these objects, according to a first aspect of the present invention, a health food product comprises a combination of: a food material having as the primary component thereof a tofu product prepared by kneading tofu containing 65 to 90% water content well, forming a patty of a predetermined size, and deep frying the patty in oil at a temperature of 165 to 190°C; and a filling including vegetables, seaweed, meat, fish, shellfish, legumes/beans/seeds/nuts other than soy beans, eggs, dairy products, and oils and fats.

According to a second aspect of the present invention, a health food product comprises a combination of: a food material prepared by kneading a mixture of tofu containing 65 to 90% water content well with at least one of vegetables, seaweed, meat, fish, shellfish, legumes/beans/seeds/nuts other than soy beans, eggs, dairy products, and oils and fats, forming a patty of a predetermined size, and deep frying the patty in oil at a temperature of 165 to 190°C; and a filling prepared by processing a mixture including any of vegetables, seaweed, meat, fish, shellfish, legumes/beans/seeds/nuts other than soy beans, eggs, dairy products, and oils and fats, but not those used in the food material.

According to a third aspect of the present invention, a health food product comprises a combination of: a food material prepared by kneading a mixture having as the primary component thereof tofu containing 65 to 90% water content with at least one of finely-chopped vegetables, eggs, legumes/beans/seeds/nuts other than soy beans, seaweed, dairy products, meat, fish, and shellfish, forming a patty of a predetermined size, and deep frying the patty in oil at a temperature of 165 to 190°C; and a filling prepared by processing a mixture including any of finely-chopped vegetables, eggs, legumes/beans/seeds/nuts other than soy beans, seaweed, dairy products, meat, fish, and shellfish, but not those used in the food material.

The health food product according to the present invention is a food product combining a ganmodoki-like food material wherein tofu, having soy protein as the primary component thereof, has been deep fried so as to contain oils and fats, with a filling containing vegetables, seaweed, meat, fish, shellfish, legumes/beans/seeds/nuts other than soy beans, eggs, and oils and fats, and accordingly is delicious to the taste.

The health food product according to the present invention is optimal as a food material, since a great amount of high-quality protein is contained therein. Further, in addition to this protein, the combination with meats and the like provides a health food product with very high nutritional value, and accordingly one can enjoy a balanced diet without eating grains (excluding wheat germ), owing to the combination of the nine food items such as vegetables, meat, and so forth.

The health food product according to the present invention contains the nine food items which Shizuo Wada has long proposed as "a diet that does not lead to weight increase", which are meat, fish, shell fish, seaweed, legumes/beans/seeds/nuts, eggs, dairy products, and oils and fats (excluding seasonings).

To further enhance the effects of eating the health food product according to the present invention, the eater preferably exercises a suitable amount afterwards.

The health food product according to the present invention enables the eater to obtain sufficient nutritional intake by eating one meal containing the nine food items until full, and chewing well. A desirable example of using this health food product is to take this meal each six hours during waking hours, and further to perform six to eight sets of one minute of suitable gymnastic exercises once a week, preferably gymnastic exercises such that intensively trains the muscles.

The nine food items contained in the health food product according to the present invention will each be described.
Meat: Pork, beef, whale, mutton, liver, chitterlings, and processed foodstuffs thereof. These are the source of vitality for humans, and are protein sources for building muscles and blood. These contain great amounts of vitamin B, have practically no sugar, and also contain protein and fat.
Fish: Fish, eels, dried whitebait, squid, octopus, crab, shrimp and prawn, and processed foodstuffs thereof. These are easier to digest and absorb than meat, have a great amount of high-quality protein, and also contain minerals (calcium), vitamin B, vitamin A and D, and so forth.
Dairy products: Milk, butter, cheese, powdered skim milk, and so forth. These contain high-quality protein, and also contain a great amount of vitamins.
Seaweed: Kelp, wakame seaweed *(undaria pinnatifida*), hijiki seaweed (*hizikia fusiforme*), laver (*porphyra yezoensi*), mozuku algae (*nemacystus decipiens),* and the like which contain a great deal of iodines as well as a great amount of calcium, vitamin A, and iron. These further contain substances known to lower blood pressure.
Legumes/beans/seeds/nuts: Adzuki beans, snap peas, soy beans, sesame, peanuts, walnuts, almonds, and processed foodstuffs thereof. Of these, soy beans are most nutritious. These contain plant-based protein, fats, sugars, vitamin B, and so forth.
Eggs: Chicken and quail eggs and the like, and processed foodstuffs thereof. These are highly digestible, and have great amounts of vitamins, calcium, and high-quality protein.
Vegetables: Green and yellow vegetables (tomatoes, spinach, mustard greens, chives, carrots, squash, etc.), white vegetables (cabbage, cucumbers, lotus root, daikon (Japanese radish) etc.), mosses, and so forth. These contain a great amount of carotene, vitamin A, and vitamin C.
Oils and fats: Vegetable oils and fats (salad oil, rape seed oil, soybean oil, etc.), and animal oils and fats (beef tallow, lard, etc.). These contain a great amount of fats, advantageous for the skin and beauty.
Shellfish: Akagai bloody clams (*scapharca broughtonii),* Asari baby clams (*ruditapes philippinarus*), Hamaguri hard clams *(meretrix lusoria*), oysters, and so forth. These have a great deal of minerals, high-quality protein, vitamin B12, and are advantageous regarding recovering liver functions and pernicious anemia.

All nine of these food items are preferably eaten at one meal, and should be chewed well until full. What is crucial with such a diet is to not eat any grains such as rice or starches along with these (although slight amounts as seasoning are permissible). Particularly, sweets between meals (excluding artificial sweeteners) and alcohol must be avoided while dieting, since obesity cannot be avoided while eating sweets, ice cream, and so forth.

Of all grains, wheat should be particularly avoided, though wheat products with sugars removed, such as wheat germ, may be taken as a vitamin source.

The health food product according to the present invention uses tofu containing 65 to 90% water content, and ingredients selected from the above-described nine items which are chopped into a suitable size, placed in a kneading bowl with the tofu to mix and knead the ingredients for example, formed into a suitable size, and deep fried with oil to prepare a ganmodoki-like food material. The filling to be combined with this food material is preferably formed into a patty. The health food product according to the present invention is seasoned according to taste. Sweeteners used are preferably artificial sweeteners.

### BRIEF DESCRIPTION OF THE DRAWINGS

Fig. 1 is a cross-sectional view of a first embodiment of the health food product according to the present invention;
Fig. 2 is a perspective view of a modification of the first embodiment; and
Fig. 3 is a side view of another modification of the first embodiment.

### DESCRIPTION OF THE PREFERRED EMBODIMENTS

The health food product according to the present invention is formed by first forming a disc-like object of a ganmodoki-like food material primarily comprising tofu, along with vegetables, seaweed, eggs, and the like. This is used as a bun which is sliced horizontally, and a filling of meat and the like somewhat like meatloaf, in the shape of a patty is placed therein, so the ease of eating is the same as with conventional fast foods. The ganmodoki-like food material primarily comprising tofu which has been deep-fried goes well with the meatloaf-like filling, and eating this health food product is not very different in sensation from eating conventional bread-based products.

The health food product according to the present invention contains the nine groups of vegetables, seaweed, meat, fish, shellfish, legumes/beans/seeds/nuts, eggs, dairy products, and oils and fats, so nutritional balance is excellent, and one can lose weight and intake sufficient nutrition without adding other foodstuffs.

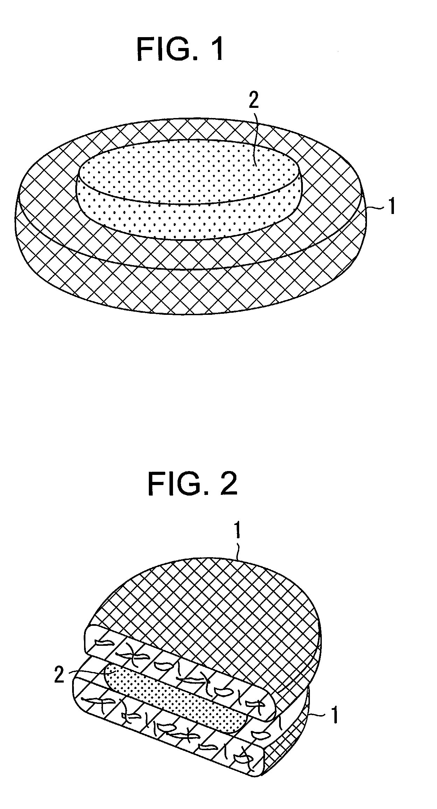

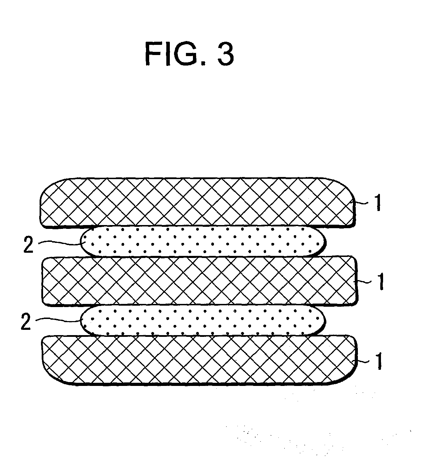

An Embodiment of the health food product according to the present invention will be described with reference to the drawings. Fig. 1 is a cross-sectional view of a first embodiment of the health food product according to the present invention, Fig. 2 is a perspective view of a modification of the first embodiment, and Fig. 3 is a side view of another modification of the first embodiment.

The foremost feature of the health food product according to the present invention is the ganmodoki-like food material primarily comprising tofu and containing high-quality protein, and the combination of the filling therewith. That is to say, the health food product according to the present invention contains the aforementioned nine food items without fail, and does not contain grain (excluding wheat germ), starch, or sugars, other than for seasonings.

With the health food product according to the present invention, the food material 1 having soy protein as the primary constituent is important. This food material 1 is prepared by soaking soy beans, and boiling the soy beans, the pulverizing and adding a solidifying agent (bittern) to make tofu, which is then squeezed till the water component thereof is 70 to 85%. This is then placed in a mortar or the like and kneaded, the shaped by hand or the like into a disc shape, deep fried in oil at a temperature of 165 to 190°C, and removed from the oil when the color of the surface is golden brown. Thus, the food material 1 is completed. Note that the food material 1 may also contain, besides the tofu, finely chopped vegetables, seaweed, meat, fish, or the like, to make a ganmodoki-like food material.

The vegetables or the like to be added to the food material 1 are selected as suitable from the aforementioned nine food items, and may be changed according to the foods to be included in a filling 2.

An example of making such a ganmodoki-like food material is to strain ordinary cotton (or hard) tofu, finely pulverize 650 grams of the tofu in a mortar, add 50 of eggs as a binder, and further add salt, artificial sweetener and other flavorings. To this is added finely-chopped carrots, burdock roots, shiitake mushrooms cut into fine strips, and other vegetables, along with seaweed such as hijiki seaweed, and further kneaded with a pestle. This is formed into a disc 5 to 30 mm in thickness, fried for 1 to 2 minutes in soybean oil heated to 150 to 180°C, and further heated in a steamer at 90°C, thereby obtaining the ganmodoki-like food material 1.

Next, the filling 2 to be used with the health food product according to the present invention will be described. All materials generally used for making meatloaf can be used as the filling 2. Meat, poultry, fish, or the like, preferably ground, is mixed with vegetables such as onions, and also with beaten eggs, so as to be formed into a patty of a suitable size. The patty is then fried, grilled, broiled, baked, or cooked in some other way so as to be suitable for a filling, thereby obtaining the food material 2.

The bun-shaped food material 1 which has been deep-fried as described above is sliced in two with a knife or the like, and the food material 2 is placed inside (see Fig. 1) Or, as shown in Fig. 3, the food material 1 may be formed fairly thick and then sliced in three, with two patties of the food material 2 placed therebetween.

An example of a good way to lose weight eating the health food product according to the present invention is as follows. One eats the health food product according to the present invention until full for one meal per six hours during waking hours. This is continued for around five weeks. Around once a week, 6 to 8 sets of one minute of gymnastics for training muscles are performed after a meal. Eating this health food product in this way for five to six weeks makes the body healthy and suitably slender.

### First Embodiment

800 grams of cotton tofu was pulverized, wrapped in coarse straining cloth, and a weight was placed thereupon to strain the tofu. At the point that the tofu was strained to a water content of around 70%, the tofu (now 650 grams) was placed in a mortar along with 30 grams of chopped vegetables, a suitable amount of black sesame, and a suitable amount of beaten eggs, and stirred fairly well and kneaded. This was formed into a disc shape with a predetermined thickness while kneading with the hands, placed in vegetable oil heated to 190°C, and deep fried until golden brown, thereby yielding the food material 1.

On the other hand, two eggs, a suitable amount of onions and the like were mixed with 50 grams of ground beef and formed into a patty of a suitable size, and fried in a frying pan, thereby yielding the filling food material 2.

After the food material 1 cooled, this was sliced into two with a knife so as to obtain two discs, and the filling food material 2 was placed therebetween, thereby completing the health food product according to the present invention. The health food product thus prepared is warmed on a hot plate or in a microwave oven and sold at shops in the same way as with conventional hamburgers and the like.

### Modifications

As shown in Fig. 2, the food material 1 may be sliced only partway so as to form a pocket, with the filling food material 2 placed therein, or as shown in Fig. 3, the food material 1 may be formed fairly thick and then sliced in three, with two patties of the food material 2 placed therebetween.

### Results of an Example of Subjects Using the Food Product

As an example of using the food product according to the present invention, five subjects were subjected to a regimen wherein they were given meals of only the nine food items used in the health food product according to the present invention, ate until they were full once every six hours during waking hours, and continued this regimen for five weeks. The regimen in itself is a commonly known and practiced method and is neither a new concept nor a part of the present invention, but the advantages of the present invention are enhanced when combined with such a known regimen. After the five weeks, the subjects were tested for health, and the various indicators at the end of the five weeks as compared with those at the beginning of the test are as shown in Table 1.

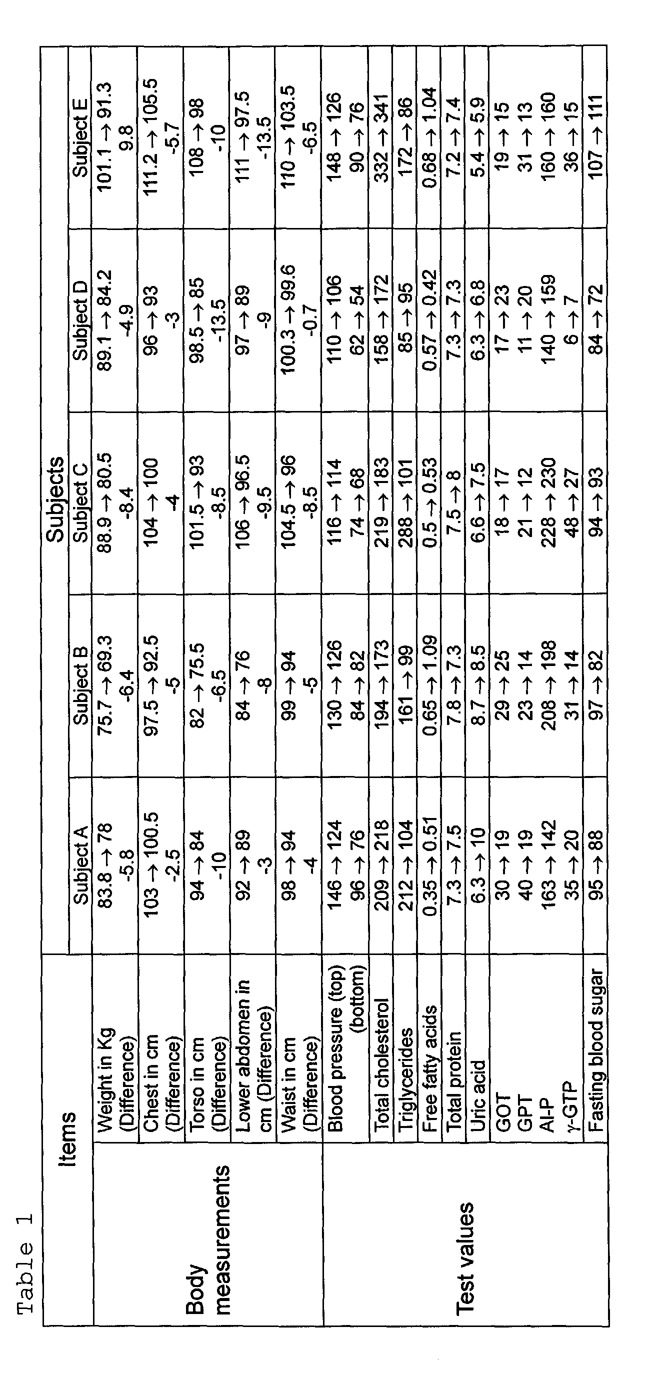

As can be seen from the Table, all subjects lost considerable weight and became slender.

While the health food product according to the present invention has been described as being used in a regimen as described above, it is needless to say that the health food product according to the present invention may be eaten otherwise as well, for example, as a source of nutrients and fiber missing from the diet, as a substitute for fast foods, or simply to enjoy the flavor.

## Claims

1. A health food product comprising a combination of:
a food material having as the primary component thereof a tofu product prepared by
kneading tofu containing 65 to 90% water content well,
forming a patty of a predetermined size, and
deep frying the patty in oil at a temperature of 165 to 190°C; and
a filling including vegetables, seaweed, meat, fish, shellfish, legumes/beans/seeds/nuts other than soy beans, eggs, dairy products, and oils and fats.

2. A health food product comprising a combination of:
a food material prepared by
kneading a mixture of tofu containing 65 to 90% water content well with at least one of vegetables, seaweed, meat, fish, shellfish, legumes/beans/seeds/nuts other than soy beans, eggs, dairy products, and oils and fats,
forming a patty of a predetermined size, and
deep frying the patty in oil at a temperature of 165 to 190°C; and
a filling prepared by processing a mixture including any of vegetables, seaweed, meat, fish, shellfish, legumes/beans/seeds/nuts other than soy beans, eggs, dairy products, and oils and fats, but not those used in said food material.

3. A health food product according to either of Claim 1 or 2, wherein said food material is sliced to a certain thickness, and said filling is placed within said food material.

4. A health food product comprising a combination of:
a food material prepared by
kneading a mixture having as the primary component thereof tofu containing 65 to 90% water content with at least one of finely-chopped vegetables, eggs, legumes/beans/seeds/nuts other than soy beans, seaweed, dairy products, meat, fish, and shellfish,
forming a patty of a predetermined size, and
deep frying the patty in oil at a temperature of 165 to 190°C; and
a filling prepared by processing a mixture including any of finely-chopped vegetables, eggs, legumes/beans/seeds/nuts other than soy beans, seaweed, dairy products, meat, fish, and shellfish, but not those used in said food material.

5. A health food product according to any one of Claims 1, 2, or 4, wherein three slices of said food material are used with said filling therebetween.

6. A health food according to any one of Claims 2 through 5, containing all of the nine groups of vegetables, seaweed, meat, fish, shellfish, legumes/beans/seeds/nuts, eggs, dairy products, and oils and fats, when a plurality of layers of said food material and said filling are combined.
